# EUROPEAN PATENT SPECIFICATION

(11) **EP 0 484 938 B1**
(45) Date of publication and mention of the grant of the patent: **04.10.1995**
(21) Application number: 91118986.8
(22) Date of filing: 07.11.1991
(51) Int. Cl.: F21M 3/20, B60Q 1/076

(54) **Dipping headlamp for vehicles**
Abblendlichtscheinwerfer für Fahrzeuge
Feu de croisement pour véhicules

(30) Priority: 09.11.1990 IT 6788190
(43) Date of publication of application: 13.05.1992
(73) Proprietor: CARELLO S.p.A., I-10135 Torino (IT)
(72) Inventor: Sala, Giuseppe, I-10070 Fiano (IT)
(74) Representative: Cerbaro, Elena

(56) References cited:
- EP-A- 0 330 884
- US-A- 4 524 407

## Description

This invention relates to a dipping headlamp for vehicles of the type defined in the preamble of claim 1.

As described in EP-A-0 330 884, the known headlamps comprise an outer enclosure generally constructed in the form of a cup, an orientatable reflector located within the enclosure to rotate with respect to the said enclosure around at least one axis, and first and second means of adjustment to adjust the position of the reflector about the said axis, the means of adjustment comprising a control rod connected to the reflector and substantially perpendicular to the said axis, the said first means of adjustment including an actuator which is aligned with the control rod for axial displacement of the said rod with respect to the enclosure. The actuator is coupled to the enclosure in a manner which is axially displaceable and angularly fixed.

In known headlamps of the type described above the first and second means of adjustment mentioned are normally used to effect first a coarse adjustment and then a fine adjustment of the orientation of the reflector with respect to the enclosure.

Given that coarse adjustment is normally performed when a headlamp is mounted on the corresponding vehicle, it is generally necessary that such adjustment should be performed in the simplest and quickest manner possible.

The object of this invention is to provide a headlamp of the type described above in which coarse adjustment of the orientation of the reflector with respect to the enclosure can be affected in an extremely simple and relatively cheap manner.

According to this invention there is provided a dipping headlamp for vehicles as defined in claim 1.

In the headlamp described the said means of closure include a plug, and the said second means of adjustment include an adjustment rod which is substantially coaxial with the said control rod and extends in an axially adjustable position through the said plug, one end of the said adjustment rod being connected to an enclosure for the said motor. In particular the said control rod is connected to the motor by means of a first screw and nut coupling, and the said adjustment rod is connected to the said plug by means of a second screw and nut coupling, the said second coupling having a greater pitch than the said first coupling.

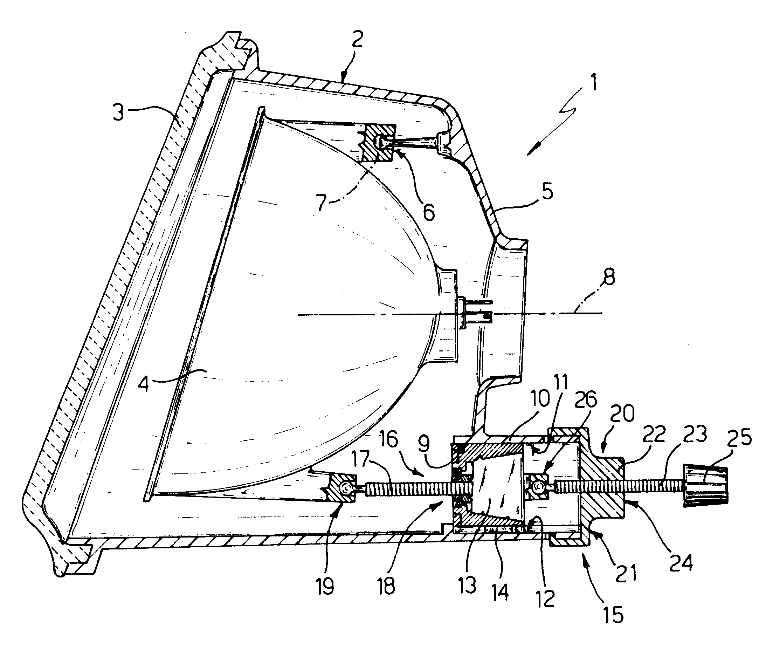

The invention will now be described with reference to the appended figure which illustrates a preferred non-restrictive embodiment thereof diagrammatically and in cross-section.

In the appended figure, 1 indicates a dipping headlamp incorporating an outer enclosure 2 in the shape of a cup, which is closed off at the front by a transparent sealing member 3 and encloses internally an orientatable reflector 4.

External enclosure 2 in turn includes a base wall 5, to which reflector 4 is attached by means of two joints 6 (of which only one is illustrated) placed in line along an axis 7 which is horizontal and substantially at right angles to one optical axis 8 of the said reflector 4.

Wall 5 is provided in its lower portion with an opening 9 surrounded by a collar 10, of substantially cylindrical shape, which extends inwards in a direction substantially parallel to optical axis 8 of reflector 4.

Within enclosure 2, collar 10 forms a seat 11 and is provided internally with an axial groove 12 which extends over the entire length of said collar 10. Seat 11 and groove 12 form a prismatic axial guide for a reversible electric motor 13 which is housed within seat 11, of the hollow shaft type. Motor 13 has an outer enclosure which is connected in an axially displaceable manner to seat 11 and is provided with a radial tooth 14 which engages groove 12 and acts together with said groove 12 to fix said motor 13 angularly to collar 10.

Electric motor 13 forms part of an adjustment device 15, and within device 15 part of an activating device 16 which also includes a control rod 17 which is substantially at right angles to axis 7. Rod 17 has a first extremity which extends through a rotor of motor 13 and is connected to the said rotor by means of a screw and nut coupling 18, and a second end connected to reflector 4 by means of a joint 19 which prevents rotation of said rod 17 about its own axis.

Adjustment device 15 also includes another activating device 20 which in turn includes a plug 21 which is connected in a known way to the outer end of collar 10 and has an axial tubular appendage 22 which is coaxial with rod 17. Activating device 20 also includes a rod 23 which is coaxial with rod 17 and extends through tubular appendage 22, to which it is connected via a screw and nut coupling 24 having a greater pitch than coupling 18.

Rod 23 is provided at one end thereof outside collar 10 with a manual control knob 25 and is connected at its other end, within collar 10, to the enclosure of electric motor 13 by means of a releasable universal joint 26.

In accordance with a variant which is not illustrated, collar 10 may conveniently be made separately from outer enclosure 2 and be connected in a movable way to the posterior end of said enclosure 2 without going beyond the scope of this invention.

In use rod 17 is connected to electric motor 13 and inserted into collar 10 together with said motor 13 after the latter has been placed in an angular position such as to engage tooth 14 within groove 12. Then rod 17 is releasably connected to reflector 4, and plug 21 is placed so as to close off collar 10. It is then possible to mount rod 23 through plug 21 and then by acting on knob 25 to axially displace said rod 23 in such a way as to releasably connect it to the enclosure of motor 13 through joint 26.

From the above description it will be clear that rod 23, which is placed in series with motor 13 with respect to rod 17, may be used to displace motor 13 and rod 17 axially in such a way as to achieve coarse adjustment of the orientation of reflector 4 with respect to enclosure 2 about axis 7 in an extremely simple way and using relatively economical transmission couplings. This coarse adjustment may then be followed by finer adjustment of the position of rod 17 by the action of motor 13.

As is known, an orientatable reflector like reflector 4 described is normally orientatable not only about axis 7 but also about a vertical axis passing through one of joints 6 and through joint 19. It is obvious that this adjustment too may be performed using an adjustment device similar to device 15 described and connected to reflector 4 at the location of the one of the two joints 6 which is not visible in the appended figure.

## Claims

1. A dipping headlamp (1) for vehicles incorporating an outer enclosure (2) generally in the shape of a cup, an orientatable reflector (4) placed within the enclosure (2) to rotate with respect to the said enclosure (2) around at least one axis (7), and first (16) and second (20) means of adjustment to adjust the position of the reflector (4) about the said axis (7), the means of adjustment (16, 20) comprising a control rod (17) attached to the reflector (4) and substantially perpendicular to the said axis (7), the said first means of adjustment (16) including a motor (13) for axially displacing the said rod (17) with respect to the enclosure (2), said second means (20) of adjustment being placed in series with the motor (13) with respect to the said rod (17), and a guide means (10) being borne by the said enclosure (2) to support the said motor (13) in a manner which is axially movable and angularly fixed, the said second means of adjustment (20) being placed between the said motor (13) and the enclosure (2) to immobilise the motor (13) in an axially adjustable position along the the said guide means (10), characterized in that the said guide means include a collar (10) communicating with a space within the enclosure (2) and the exterior, the motor (13) being mounted in a movable and angularly fixed manner within the said collar (10), and sealing means (21) being provided in connection with the collar (10) to close off the said collar (10) from the exterior.

2. A headlamp according to claim 1, characterised in that the said sealing means comprise a plug (21) and the said second means of adjustment (20) include an adjustment rod (23) which is substantially coaxial with the said control rod (17) and extends through the said plug (21) in an axially adjustable position, one end of the said adjustment rod (23) being connected to an enclosure for the said motor (13).

3. A headlamp according to claim 2, characterised in that the said control rod (17) is connected to the motor (13) through a first screw and nut coupling (18) and the said adjustment rod (23) is connected to the said plug (21) through a second screw and nut coupling (24), the said second coupling (24) having a pitch greater than that of the said first coupling (18).

## Patentansprüche

1. Ein neigbarer Fahrzeugscheinwerfer (1) mit einem Außengehäuse (2) generell in Topfform, einem orientierbaren Reflektor (4), der innerhalb des Gehäuses (2) untergebracht ist, um relativ zu dem Gehäuse (2) um mindestens eine Achse (7) geneigt zu werden, und ersten (16) und zweiten (20) Mitteln für das Einstellen der Position des Reflektors (4) um die Achse (7), wobei die Einstellmittel (16, 20) einen Steuerstab (17) umfassen, angebracht an dem Reflektor (4) und im wesentlichen senkrecht zu der Achse (7), wobei die ersten Einstellmittel (16) einen Motor (13) umfassen für die axiale Verlagerung des Stabes (17) relativ zu dem Gehäuse (2), wobei die zweiten Einstellmittel (20) in Reihe mit dem Motor (13) relativ zu dem Stab (17) angeordnet sind, und mit einem Führungsmittel (10), das von dem Gehäuse (2) getragen wird zur Abstützung des Motors (13) derart, daß Axialbeweglichkeit und Winkelfestigkeit gegeben sind, welches zweite Einstellmittel (20) zwischen dem Motor (13) und dem Gehäuse (2) angeordnet ist zum Immobilisieren des Motors (13) in einer axial einstellbaren Position längs des Führungsmittels (10), **dadurch gekennzeichnet**, daß das Führungsmittel einen Kragen (10) umfaßt, der mit einem Raum innerhalb des Gehäuses (2) und dem Äußeren kommuniziert, wobei der Motor (13) in beweglicher und winkelfixierter Weise innerhalb des Kragens (10) angeordnet ist, und daß Dichtungsmittel (21) in Verbindung mit dem Kragen (10) vorgesehen sind zum Absperren des Kragens (10) gegen das Äußere.

2. Ein Scheinwerfer nach Anspruch 1, dadurch gekennzeichnet, daß das Abdichtmittel einen Stopfen (21) umfaßt, und daß das zweite Einstellmittel (20) einen Einstellstab (23) umfaßt, der im wesentlichen koaxial mit dem Steuerstab (17) ist und sich durch den Stopfen (21) in axial einstellbarer Position erstreckt, wobei ein Ende des Einstellstabes (23) mit einer Umhüllung für den Motor (13) verbunden ist.

3. Ein Scheinwerfer nach Anspruch 2, dadurch gekennzeichnet, daß der Steuerstab (17) mit dem Motor (13) über eine erste Schrauben-Mutter-Kupplung (18) verbunden ist, und daß der Einstellstab (23) mit dem Stopfen (21) über eine zweite Schrauben-Mutter-Kupplung (24) verbunden ist, wobei die zweite Kupplung (24) eine Steigung aufweist, die größer ist als die der ersten Kupplung (18).

## Revendications

1. Projecteur réglable (1) pour véhicules, comprenant une enceinte extérieure (2) généralement en forme de coupe, un réflecteur orientable (4) placé à l'intérieur de l'enceinte (2) pour tourner par rapport à ladite enceinte (2) autour d'au moins un axe (7), et des premiers (16) et seconds (20) moyens de réglage pour régler la position du réflecteur (4) autour dudit axe (7), les moyens de réglage (16, 20) comprenant une tige de commande (17) fixée au réflecteur (4) et sensiblement perpendiculaire audit axe (7), lesdits premiers moyens de réglage (16) comprenant un moteur (13) pour déplacer axialement ladite tige (17) par rapport à l'enceinte (2), lesdits seconds moyens (20) de réglage étant placés en série avec le moteur (13) par rapport à ladite tige (17), et un moyen de guidage (10) étant porté par ladite enceinte (12) pour supporter ledit moteur (13) d'une manière qui est déplaçable axialement et fixe angulairement, lesdits seconds moyens de réglage (20) étant placés entre ledit moteur (13) et l'enceinte (2) afin d'immobiliser le moteur (13) dans une position réglable axialement le long desdits moyens de guidage (10), caractérisé en ce que lesdits moyens de guidage comprennent un collet (10) communiquant avec un espace à l'intérieur de l'enceinte (2) et avec l'extérieur, le moteur (13) étant monté d'une manière mobile et angulairement fixe à l'intérieur dudit collet (10), et des moyens d'obturation (21) étant prévus en liaison avec le collet (10) pour obturer ledit collet (10) depuis l'extérieur.

2. Projecteur selon la revendication 1, caractérisé en ce que lesdits moyens d'obturation comprennent un bouchon (21) et en ce que lesdits seconds moyens de réglage (20) comprennent une tige de réglage (23) qui est sensiblement coaxiale à ladite tige de commande (17) et s'étend à travers ledit bouchon (21) en une position réglable axialement, une première extrémité de ladite tige de réglage (23) étant reliée à une enceinte destinée audit moteur (13).

3. Projecteur selon la revendication 2, caractérisé en ce que ladite tige de commande (17) est reliée au moteur (13) par l'intermédiaire d'un premier accouplement par écrou et vis (18) et en ce que ladite tige de réglage (23) est reliée audit bouchon (21) par l'intermédiaire d'un second accouplement par écrou et Vis (24), ledit second accouplement (24) ayant un pas supérieur à celui dudit premier accouplement (18).
